# EUROPÄISCHE PATENTSCHRIFT

(11) **EP 0 583 679 B1**
(45) Veröffentlichungstag und Bekanntmachung des Hinweises auf die Patenterteilung: **18.03.1998**
(21) Anmeldenummer: 93112429.1
(22) Anmeldetag: 03.08.1993
(51) Int. Cl.: G02B 6/30, G02B 6/12, G02B 6/26

(54) **Integriert-optische Anordnung zur Umwandlung einer optischen Welle relativ kleineren Querschnitts in eine optische Welle relativ grösseren Querschnitts**
Integrated optical device to change an optical wave with a relatively small cross section to an optical wave with a relatively large cross section
Dispositif d'optique intégrée pour transformer une onde optique avec une coupe transversale relativement petite en une onde optique avec une coupe transversale plus large

(30) Priorität: 14.08.1992 DE 4227045
(43) Veröffentlichungstag der Anmeldung: 23.02.1994
(73) Patentinhaber: SIEMENS AKTIENGESELLSCHAFT, 80333 München (DE)
(72) Erfinder: Müller, Gustav, Dr., D-8000 München 50 (DE); Stoll, Lothar, Dipl.-Phys., D-8000 München 70 (DE); Sauer, Bernd, Dipl.-Ing., D-8050 Freising (DE)

(56) Entgegenhaltungen:
- EP-A- 0 495 202
- EP-A- 0 498 170
- DE-A- 4 142 850
- PATENT ABSTRACTS OF JAPAN vol. 5, no. 137 (E-72)29. August 1981 & JP-A-56 073 485 (FUJITSU) 18. Juni 1981
- PATENT ABSTRACTS OF JAPAN vol. 10, no. 243 (P-489)21. August 1986 & JP-A-61 073 908 (MATSUSHITA ELECTRIC) 16. April 1986
- PATENT ABSTRACTS OF JAPAN vol. 11, no. 15 (P-536)16. Januar 1987 & JP-A-61 190 307 (MATSUSHITA ELECTRIC) 25. August 1986
- OPTICS LETTERS Bd. 16, Nr. 5, 1. Maerz 1991,WASHINGTON US Seiten 306 - 308 THURSTON ET AL.
- PROC. OF THE SPIE Bd. 1362, 1990, BELLINGHAM, US Seiten 844 - 852 DOMANSKI ET AL.
- PATENT ABSTRACTS OF JAPAN vol. 6, no. 229 (P-155)16. November 1982 & JP-A-57 132 105 (NIPPON DENKI) 16. August 1982

## Beschreibung

Die Erfindung betrifft gemäß Anspruch 1 eine integriert-optische Anordnung zur Umwandlung einer optischen Welle relativ kleineren Querschnitts in eine optische Welle relativ größeren Querschnitts.

Bei der Ankopplung optischer Halbleiterkomponenten an Monomodefasern ist es aufgrund der unterschiedlichen optischen Fleckgrößen und Formen der in den Komponenten und Fasern geführten optischen Wellen bzw. Moden zur Erreichung hoher Koppelwirkungsgrade erforderlich, die verschiedenen Fleckgrößen und Formen, d. h. die verschiedenen Querschnitte dieser optischen Wellen aneinander anzupassen.

Diese Anpassung kann beispielsweise durch eine Anordnung von Mikrolinsen erfolgen, bei deren Aufbau aber mindestens eine aufwendige Präzisionsjustierung erforderlich ist.

Aus der EP-A-0 495 202 geht eine integriert-optische Anordnung der eingangs genannten Art hervor, die einen ersten Rippenwellenleiter mit einer Rippe zum Führen der optischen Welle größeren Querschnitts und einen vom Material des ersten Wellenleiters vollständig umgebenen zweiten Rippenwellenleiter mit einer taperförmigen Rippe zum Einkoppeln der optischen Welle kleineren Querschnitts aufweist, wobei ein progressives Koppeln dieser Welle in den ersten Rippenwellenleiter stattfindet.

Bei dieser bekannten Anordnung wird die Modenumwandlung bereits in einem Halbleiterchip durchgeführt. Die Monomodefaser kann durch einfache Stoßkopplung verlustarm und mit hohen Justiertoleranzen an den Halbleiterchip angekoppelt werden.

Diese bekannte Anordnung eignet sich gut für die Integration mit überwachsenen Wellenleiterstrukturen mit kleiner Fleckweite der geführten optischen Wellen, führt aber bei Rippenwellenleitern, wie sie beispielsweise in optischen Schaltern verwendet werden (siehe EP-A-0 415 225 A2 = GR 89 P 1730 E; DE 40 30 756 A1 = 90 P 1727 DE) zu einem komplizierten Herstellungsprozeß, der mehrere Epitaxieschritte erfordert.

Die im Anspruch 1 angegebenen Erfindung stellt eine Anordnung der eingangs genannten Art bereit, die auf einfache Weise monolithisch integriert herstellbar ist.

Durch die Erfindung ist vorteilhafterweise eine monolithisch integrierte Anordnung geschaffen, die bei einfacher Herstellung die Transformation der Mode eines passiven Rippenwellenleiters in eine faserangepaßte Mode ermöglicht, wobei die faserangepaßte Mode in eine Faser einkoppelbar ist, die wie bei der bekannten integriert optischen Anordnung durch einfache Stoßkopplung verlustarm und mit hohen Justiertoleranzen an die erfindungsgemäße Anordnung angekoppelt werden kann.

Bevorzugte und vorteilhafte Ausgestaltungen der Erfindung gehen aus den Unteransprüchen hervor.

Die Erfindung wird anhand der Figuren in der nachfolgenden Beschreibung beispielhaft näher erläutert. Es zeigen:
- Figur 1: eine Draufsicht auf ein Ausführungsbeispiel der erfindungsgemäßen Anordnung,
- Figur 2: einen vertikalen längsaxialen Schnitt senkrecht zur Zeichenebene der Figur 1 durch das Beispiel nach Figur 1 längs der Schnittlinie II - II in Figur 1,
- Figuren 3a bis 3f: vertikale Querschnitte senkrecht zur Zeichenebene der Figur 1 durch das Beispiel nach Figur 1 längs der senkrecht zur Schnittlinie II - II in Figur 1 stehenden Schnittlinien III - III, IV - IV, V - V, VI - VI, VII - VII bzw. VIII - VIII, und
- Figuren 4 und 5: in der Schnittdarstellung nach Figur 2 zwei gegenüber dem Beispiel nach den Figuren 1 und 2 geringfügig modifizierte Beispiele der erfindungsgemäßen Anordnung.

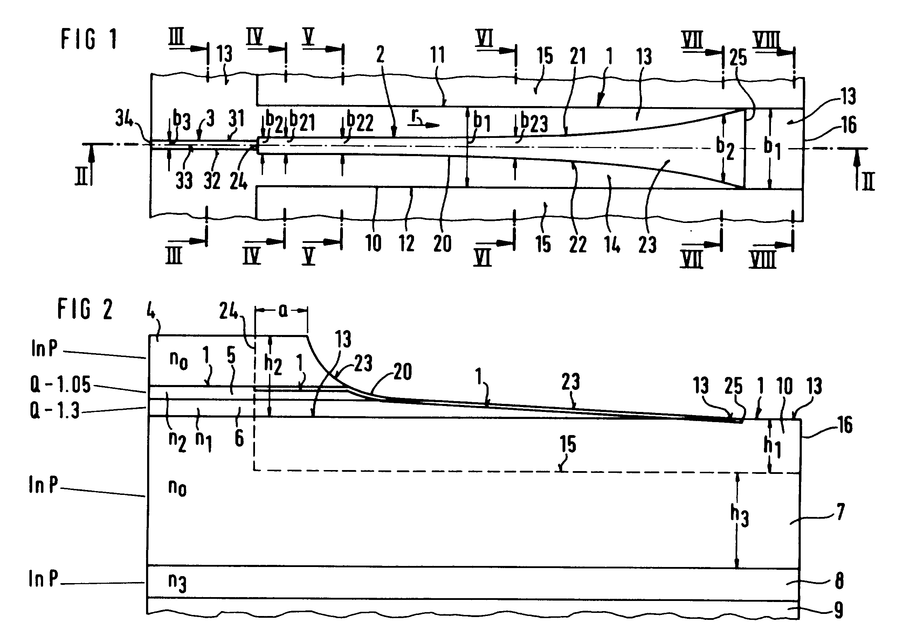

Beim Beispiel nach den Figuren 1, 2 und 3a bis 3f sind auf einem Substrat 9 eine Schicht 8 und auf der Schicht 8 eine Schicht 7 aufgebracht. Auf der Oberfläche 15 der Schicht 7 ist eine langgestreckte Rippe 10 mit seitlichen Begrenzungsflächen 11 und 12 und einer Oberfläche 13 ausgebildet. Die Rippe 10 ist gegenüber der niedriger liegenden Oberfläche 15 der Schicht 7 erhoben und weist eine gleichmäßige Breite b₁ und Höhe bzw. Dicke h₁ auf .

Die Schicht 7 mit der langgestreckten Rippe 10 bildet im wesentlichen den ersten Rippenwellenleiter 1 zum Führen der optischen Welle mit dem größeren Querschnitt, die in diesem Fall im Bereich der Rippe 10 und unterhalb dieser Rippe 10 in der Schicht 7 in Längsrichtung r der Rippe 10 geführt ist. Die Schicht 8 fungiert im wesentlichen als eine den Rippenwellenleiter 1 nach unten begrenzenden Mantelschicht, wobei die Brechzahl n₃ dieser Schicht 8 kleiner sein muß als die Brechzahl n₀ der Schicht 7.

Der Rippenwellenleiter 1 könnte ähnlich wie im Fall des später zu beschreibenden beispielhaften zweiten Rippenwellenleiters 2 auch so ausgebildet sein, daß in der Schicht 7 unterhalb der Rippe 10 eine gesonderte Wellenleiterschicht mit einer gegenüber der Umgebung, insbesondere auch der Rippe 10, höheren Brechzahl ausgebildet ist, in der im wesentlichen die optische Welle unter der Rippe 10 geführt wird.

Bei vorgegebenem größeren Querschnitt der zu führenden optischen Welle sind bekanntermaßen die Breite b₁ und die Dicke h₁ sowie die Dicke h₃ der Schicht 7 zwischen der Oberfläche 15 und der Schicht 8 den Abmessungen oder auch der Form dieses Querschnitts so anzupassen, daß die Welle dieses Querschnitts im Rippenwellenleiter 1 geführt wird.

Auf der Oberfläche 13 der Rippe 10 des ersten Rippenwellenleiters 1 ist der zweite taperförmige Rippenwellenleiter 2 mit der Rippe 20 und dem Ende 24 zum Einkoppeln der optischen Welle mit dem kleineren Querschnitt in den zweiten Rippenwellenleiter 2 ausgebildet, der in der Längsrichtung r der Rippe 10 des ersten Rippenwellenleiters 1 verläuft. Die Rippe 20 des zweiten Rippenwellenleiters 2 ist im wesentlichen durch seitliche Begrenzungsflächen 21 und 22 und durch eine zwischen diesen Begrenzungsflächen 21 und 22 liegende Oberfläche 23 begrenzt und weist an dem zum Einkoppeln der optischen Welle mit dem kleineren Querschnitt dienenden Ende 24 des zweiten Rippenwellenleiters 2 eine im Vergleich zur Breite b₁ der Rippe 10 des Rippenwelleneiters 1 kleinere Breite b₂ auf. Die Dicke des zweiten Rippenwellenleiters 2 ist mit h₂ bezeichnet.

Bei vorgegebenem kleinerem Querschnitt der einzukoppelnden optischen Welle sind die Breite b₂ der Rippe 20 und die Dicke h₂ des zweiten Rippenwellenleiters 2 bekanntermaßen den Abmessungen oder auch der Form dieses kleineren Querschnitts so anzupassen, daß diese optische Welle in den zweiten Rippenwellenleiter 2 eingekoppelt und im zweiten Rippenwellenleiter 2 in Längsrichtung r der Rippe 10 des ersten Rippenwellenleiters 1 geführt wird. Eine möglichst enge Anpassung des Endes 24 an diesen kleineren Querschnitt ist zu bevorzugen.

Die Rippe 20 verbreitert sich ausgehend vom Ende 24 des zweiten Rippenwellenleiters 2 in der Längsrichtung r der Rippe 10 des ersten Rippenwellenleiters 1 von der schmaleren Breite b₂ allmählich oder graduell auf die Breite b₁ der Rippe 10 des ersten Rippenwellenleiters 1. Beispielsweise verbreitert sich die Rippe 20 entsprechend dem in Figur 1 sichtbaren gekrummten Verlauf der Seitenflächen 21 und 22 der Rippe 20, wobei die Breite b₁ der Rippe 10 des ersten Rippenwellenleiters 1 beim anderen Ende 25 des zweiten Rippenwellenleiters 2 erreicht wird.

Gleichzeitig verjüngt sich, ausgehend vom einen Ende 24 des zweiten Rippenwellenleiters 2, die Dicke h₂ des zweiten Rippenwellenleiters 2 im Bereich von dessen Rippe 20 in der Längsrichtung r der Rippe 10 des ersten Rippenwellenleiters 1 allmählich oder graduell auf null.

Beispielsweise verjüngt sich die Dicke h₂ des zweiten Rippenwellenleiters 2 nach einem anfänglichen Abschnitt a mit im wesentlichen konstanter Dicke h₂ entsprechend dem in Figur 2 sichtbaren gekrümmten Verlauf der Oberfläche 23 des zweiten Rippenwellenleiters 2 im Bereich von dessen Rippe 20, wobei die Dicke h₂ = 0 beim anderen Ende 25 des zweiten Rippenwellenleiters 2 erreicht wird.

Die Form der Rippe 20 des zweiten Rippenwellenleiters 2, d.h. der Verlauf der Seitenflächen 21 und 22 und der Oberfläche 23 des zweiten Rippenwellenleiters 2 im Bereich von dessen Rippe 20, wird vorzugsweise so gewählt, daß sich eine verlustlose oder zumindest verlustarme Transformation der in den zweiten Rippenwellenleiter 2 eingekoppelten optischen Welle des kleineren Querschnitts in die optische Welle des größeren Querschnitts ergibt. Die für diesen Zweck optimale Form des zweiten rippenwellenleiters 2 kann durch Versuche oder rechnerisch ermittelt werden.

Die im zweiten Rippenwellenleiter 2 entlanggeführte optische Welle koppelt durch die Oberfläche 13 der Rippe 10 in den ersten Rippenwellenleiter 1 über und wird in diesem Rippenwellenleiter 1 nach Erreichen des anderen Endes 25 des zweiten Rippenwellenleiters 2 als die Welle mit dem größeren Querschnitt zu einem Auskoppelende 16 des ersten Rippenwellenleiters 1 weitergeführt. An dieses Auskoppelende 16 kann eine nicht dargestellte optische Faser stoßgekoppelt werden, in der diese Welle fortgeleitet werden kann. Die in den zweiten Rippenwellenleiter 2 einzukoppelnde optische Welle des kleineren Querschnitts wird vorzugsweise dem zum Einkoppeln dienenden einen Ende 24 des zweiten Rippenwellenleiters 2 durch einen einkoppelseitigen Rippenwellenleiter 3 zugeführt, der auf dem gleichen Substrat 9 mitintegriert sein kann und dessen Querschnittsabmessungen eng an die des Querschnitts der optischen Welle mit dem kleineren Querschnitt angepaßt ist. Dieser einkoppelseitige Rippenwellenleiter 3 weist eine durch Seitenflächen 31 und 32 und eine Oberfläche 33 begrenzte Rippe 30 und ein Einkoppelende 34 auf, durch das die optische Welle mit dem kleineren Querschnitt einkoppelbar ist. An dieses Einkoppelende 34 kann eine Halbleiterkomponente angekoppelt werden, aus der eine solche Welle austritt. Die Breite b₃ der Rippe 30 des einkoppelseitigen Rippenwellenleiters 3 ist vorzugsweise geringfügig kleiner als die Breite b₂ der Rippe 20 an dem zum Einkoppeln dienenden einen Ende 24 des zweiten Rippenwellenleiters 2 gewählt, wodurch eine verlustarme Ankopplung des einkoppelseitigen Rippenwellenleiters 3 an den zweiten Rippenwellenleiter 2 gegeben ist.

Ein besonderer Vorteil der erfindungsgemäßen Anordnung besteht darin, daß der einkoppelseitige Wellenleiter 3 und der zweite Wellenleiter 2 in der gleichen Schicht oder der gleichen Schichtstruktur ausgebildet werden können. Dadurch können vorteilhafterweise alle Schichten, die für den ersten Rippenwellenleiter 1 den einkoppelseitigen Rippenwellenleiter 3 und den zweiten Rippenwellenleiter 2 erforderlich sind, in einem einzigen Epitaxieprozeß gewachsen werden.

Beim Beispiel nach den Figuren 1, 2 und 3a bis 3f sind der einkoppelseitige Rippenwellenleiter 3 und der zweite Rippenwellenleiter 2 in einer auf der Rippe 10 des ersten Rippenwellenleiters 1 aufgebrachten Schichtstruktur ausgebildet, die aus einer Wellenleiterschicht 6 aus einer relativ zur Brechzahl n₀ der Rippe 10 größeren Brechzahl n₁, einer auf der Wellenleliterschicht 6 aufgebrachten Mantelschicht 5 mit einer zur Brechzahl n₁ der Wellenleiterschicht 6 kleineren Brechzahl n₂ und einer auf der Mantelschicht 5 aufgebrachten und die Rippe 20 bildenden weiteren Schicht 4 mit einer zur Brechzahl n₁ der Wellenleiterschicht kleineren Brechzahl, beispielsweise der Brechzahl n₀ besteht.

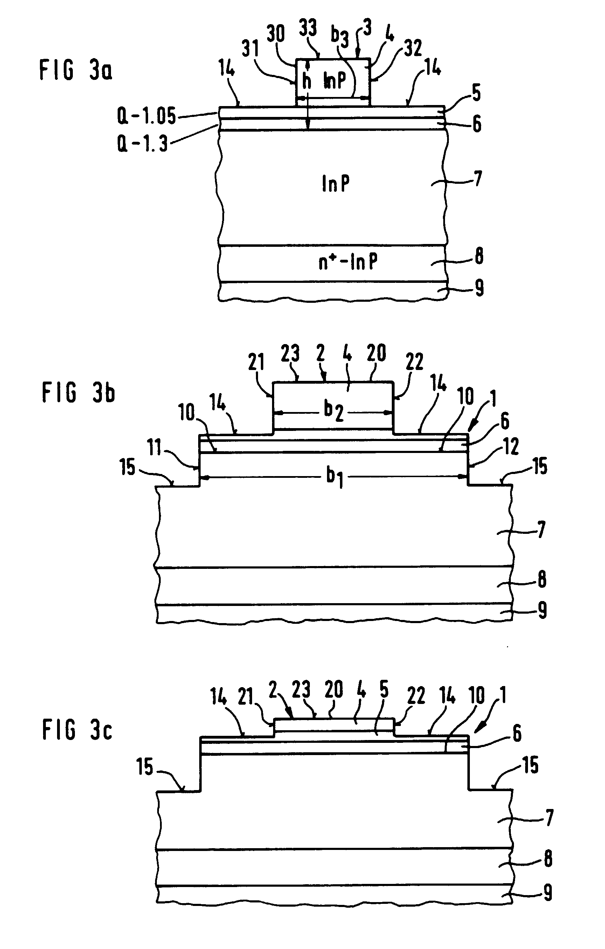

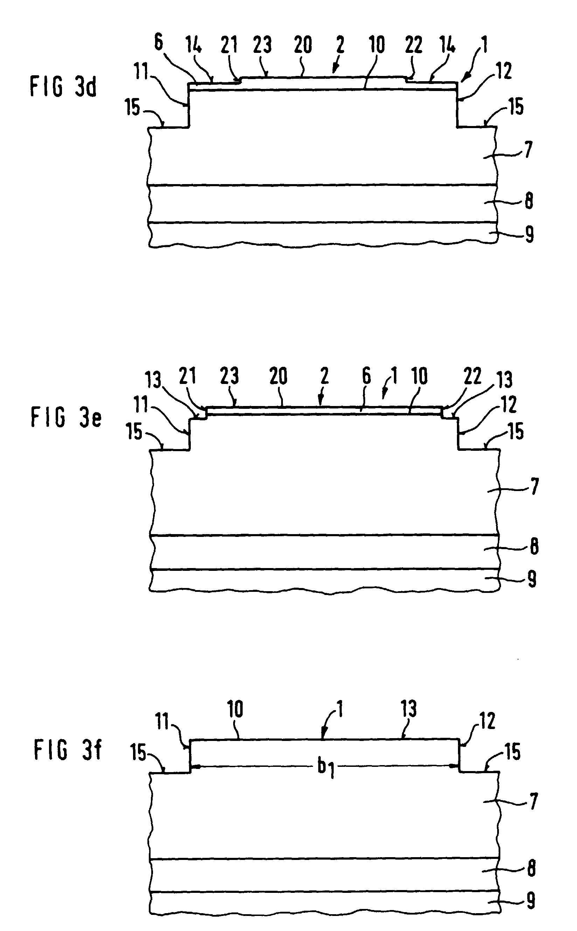

Wie aus den in den Figuren 3a bis 3f gezeigten Querschnitten hervorgeht, erstreckt sich ein Teil der Schichtstruktur über die ganze Breite der Rippe 10 des ersten Rippenwellenleiters 1. Dies gilt im Fall der Figuren 3a bis 3c für die Mantelschicht 5 und die Wellenleiterschicht 6 und im Fall der Figur 3d für die Wellenleiterschicht 6 allein. Die Breite des einkoppelseitigen Wellenleiters 3 ist jedoch allein durch die Breite b₃ der durch die Seitenflächen 31 und 32 und die Oberfläche 33 begrenzten Rippe 30 definiert. Die optische Welle kleineren Querschnitts wird in der Wellenleiterschicht 6 unter der Rippe 30 geführt, so daß die seitlich neben der Rippe 30 liegenden Teile der Schichtstruktur entfallen könnten. Dies wäre aber aus bestimmten herstellungstechnischen Gründen ungünstig. Das gleiche gilt für den zweiten Rippenwellenleiter 2, dessen Breite allein durch die in Längsrichtung r der Rippe 10 des Rippenwellenleiters 1 variierende Breite b₂ der durch die Seitenflächen 21 und 22 und die Oberfläche 23 begrenzten Rippe 20 definiert ist.

Bei diesem Beispiel bestehen z.B. das Substrat 9 aus InP, die Schicht 8 aus N⁺-dotiertem InP, die Schicht 7 mit der Rippe 10 aus InP, die Wellenleiterschicht 6 aus quaternärem Material Q-1,3, die Mantelschicht 5 aus quaternärem Material Q-1,05 und die Schicht 4 aus InP.

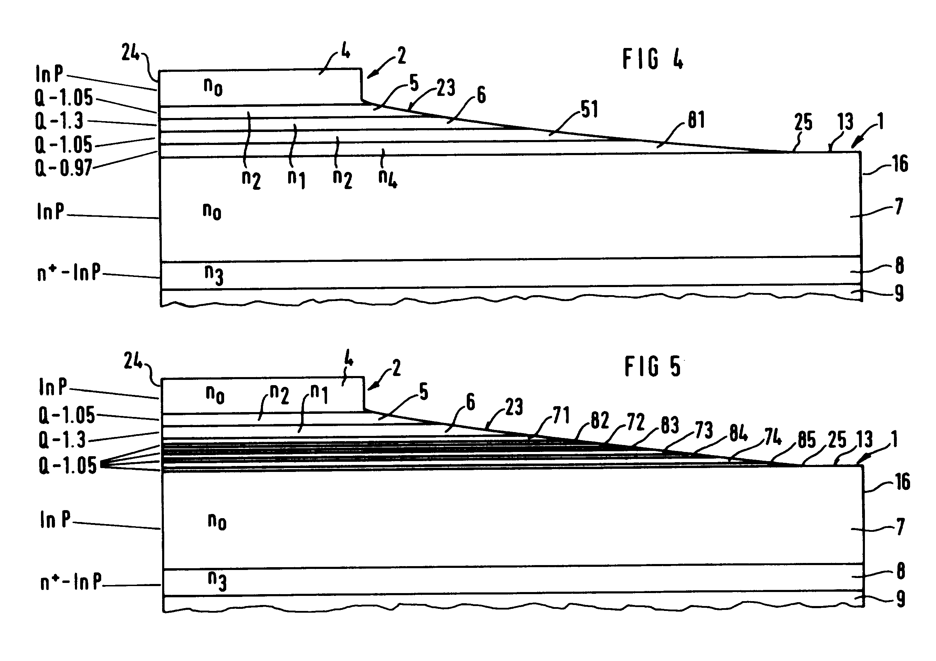

Das Beispiel nach Figur 4 unterscheidet sich vom Beispiel nach den Figuren 1 und 2 nur dadurch, daß zwischen der Wellenleiterschicht 6 und der Oberfläche 13 der Rippe 10 des ersten Rippenwellenleiters 1 zwei weitere Schichten 51 und 81 angeordnet sind. Die Schicht 51 grenzt an die Wellenleiterschicht 6 an und besteht aus dem Material Q-1,05, während die Schicht 81 an die Rippe 10 angrenzt und aus quaternärem Material Q-0,97 besteht. Durch solche zusätzliche Schichten können die Herstellungstoleranzen erhöht werden.

Letzteres gilt auch für das Beispiel nach Figur 5, das sich vom Beispiel nach den Figuren 1 und 2 nur dadurch unterscheidet, daß zwischen der Wellenleiterschicht 6 der Oberfläche 13 der Rippe 10 des ersten Rippenwellenleiters 1 vier Schichten 71 bis 74 aus InP und vier Schichten 82 bis 85 aus dem Material Q-1,05 angeordnet sind, die sich abwechseln. Die Schichten 82 bis 85 sind in zunehmendem Abstand voneinander angeordnet, beispielsweise von der Wellenleiterschicht 6 in Richtung zur Schicht 8.

Eine erfindungsgemäße Anordnung läßt sich unter Anwendung eines in der deutschen Patentanmeldung GR 92 P 1505 DE mit dem gleichen Anmeldetag ausführlich beschriebenen Verfahrens beispielsweise wie folgt herstellen:

Auf die Oberfläche eines Substrats wird ein aus den Schichten für den ersten Rippenwellenleiter 1 und den zweiten Rippenwellenleiter 2 oder den zweiten Rippenwellenleiter 2 und den einkoppelseitigen Rippenwellenleiter 3 bestehendes Schichtpaket in einem einzigen Epitaxieprozeß aufgewachsen.

Das aufgewachsene Schichtpaket wird mit einer gleichmäßig dicken Schicht aus Positiv-Photolack abgedeckt, die nur im Bereich zwischen den Linien 21, 22, 24 und 25 in Figur 1 oder zusätzlich zwischen den Linien 31 und 32 belichtet wird. Die Belichtung erfolgt jedoch so, daß die Belichtungsdosis in der Richtung r in Figur 1 entsprechend der Kurve 23 in Figur 2 von einer maximalen Belichtungsdosis bei 34 oder 24 auf die Belichtungsdosis 0 bie 25 abnimmt. Nach dem Entwickeln der derart belichteten Photolackschicht bleibt auf dem Schichtpaket allein ein taperförmiger Streifen aus entwickeltem Photolack übrig, der in Form und Größe der taperförmigen Rippe 20 nach den Figuren 1 und 2 entspricht.

Dieser taperförmige Streifen aus Photolack wird mit einem Abtragverfahren, das sowohl den Photolack als auch das vom Photolack freie und/oder freiwerdende Material des Schichtpakets abträgt, abgetragen, wodurch sich der taperförmige Streifen aus Photolack in das Schichtpaket überträgt. Als Abtragverfahren eignet sich ein reaktives Ionenstrahl-Ätzverfahren mit N₂ und O₂ als Ätzgas.

Die anfängliche Dicke der Photolackschicht ist so zu wählen, daß bei dem Abtragverfahren das Schichtpaket außerhalb des Photolacks bis zur Oberfläche der Schicht oder Schichten abgetragen wird, die für den ersten Rippenwellenleiter 1 mit der Rippe 10 vorgesehen ist oder sind, und daß unterhalb der größten Schichtdicke des entwickelten taperförmigen Streifens aus Photolack die oberste Schicht des Schichtpakets im wesentlichen erhalten bleibt.

In einem weiteren Lithographieschritt kann durch herkömmliches Ätzen der erste Rippenwellenleiter 1 mit der Rippe 10 hergestellt werden.

Bei der Belichtung zur Herstellung des taperförmigen Streifens aus Photolack kann mit einer örtlich kontinuierlich variierenden Belichtungsdosis gearbeitet werden. Einfacher ist es, eine örtlich stufenförmig variierende Belichtungsdosis zu verwenden, bei der ein Waferstepper verwendet werden kann, mit dem das stufenförmige Profil durch Mehrfachbelichtung sehr einfach erzeugt und präzise zu kontrollieren ist.

## Patentansprüche

1. Integriert-optische Anordnung zur Umwandlung einer optischen Welle relativ kleineren Querschnitts in eine optische Welle relativ größeren Querschnitts, die einen ersten Rippenwellenleiter (1) mit einer Rippe (10) mit konstantem Querschnitt zum Führen der optischen Welle größeren Querschnitts in einer Längsrichtung (r) der Rippe (10) aufweist, wobei auf der Rippe (10) dieses ersten Rippenwellenleiters (1) ein zweiter taperförmiger Rippenwellenleiter (2) mit einem Ende (24) zum Einkoppeln der optischen Welle kleineren Querschnitts ausgebildet ist, wobei die Rippe (20) dieses zweiten Rippenwellenleiters (2) an seinem Einkoppelende (24) eine im Vergleich zur Breite (b₁) der Rippe (10) des ersten Rippenwellenleiters (1) kleinere Breite (b₂) aufweist und sich ausgehend von diesem Einkoppelende (24) in der Längsrichtung (r) verbreitert, und wobei der gesamte zweite Rippenwellenleiter (2) sich in der Längsrichtung (r) in seiner Dicke (h₂) verjüngt, so daß die in dem zweiten Rippenwellenleiter (2) geführte optische Welle kleineren Querschnitts progressiv in den darunterliegenden ersten Rippenwellenleiter (1) überkoppelt und so in eine optische Welle größeren Querschnitts umgewandelt wird.

2. Anordnung nach Anspruch 1, wobei sich die Rippe (20) des zweiten Rippenwellenleiters (2) bis auf die Breite (b₁) der Rippe (10) des ersten Rippenwellenleiters (1) verbreitert.

3. Anordnung nach Anspruch 1 und 2, wobei sich die Dicke (h₂) des zweiten Rippenwellenleiters (2) auf null verjüngt.

4. Anordnung nach Anspruch 2 und 3, wobei die Verjüngung der Dicke (h₂) des zweiten Rippenwellenleiters (2) auf null und die Verbreiterung der Breite (b₂) der Rippe (20) des zweiten Rippenwellenleiters (2) auf die Breite (b₁) der Rippe (10) des ersten Rippenwellenleiters (1) an einer gemeinsamen Stelle (24) zusammenfallen.

5. Anordnung nach einem der vorhergehenden Ansprüche, wobei der zweite Rippenwellenleiter (2) in einer auf der Rippe (10) des ersten Rippenwellenleiters (1) aufgebrachten Schichtstruktur aus zumindest einer Wellenleiterschicht (6) mit einer relativ zu einer Brechzahl (n₀) dieser Rippe (10) größeren Brechzahl (n₁), einer auf der Wellenleiterschicht (6) aufgebrachten Mantelschicht (5) mit einer zur Brechzahl (n₁) der Wellenleiterschicht (6) kleineren Brechzahl (n₂) und einer auf der Mantelschicht (5) aufgebrachten weiteren Schicht (4) mit einer zur Brechzahl (n₁) der Wellenleiterschicht (6) kleineren Brechzahl (n₀) ausgebildet ist, wobei diese weitere Schicht (4) die Rippe (20) des zweiten Rippenwellenleiters (2) bildet.

6. Anordnung nach Anspruch 5, wobei die Wellenleiterschicht (6) unmittelbar auf der Rippe (10) des ersten Rippenwellenleiters (1) aufgebracht ist.

7. Anordnung nach Anspruch 5, wobei zwischen der Rippe (10) des ersten Rippenwellenleiters (1) und der Wellenleiterschicht (6) des zweiten Rippenwellenleiters (2) eine oder mehrere Schichten (51, 81; 71 82, 72, 83, 73, 84, 74, 85) angeordnet sind, deren jede eine Brechzahl (n₂, n₄; n₀, n₃) kleiner als die Brechzahl (n₁) der Wellenleiterschicht (6) aufweist.

8. Anordnung nach Anspruch 7, wobei mehrere zwischen der Rippe (10) und der Wellenleiterschicht (6) angeordnete Schichten (82, 83, 84, 85) in zunehmendem Abstand voneinander angeordnet sind.

9. Anordnung nach einem der vorhergehenden Ansprüche, wobei sich die Dicke (h₂) des zweiten Rippenwellenleiters (2) und/oder die Breite (b₂) der Rippe (20) dieses zweiten Rippenwellenleiters (2) stufenförmig verjüngt.

## Claims

1. Integrated optical array for changing an optical wave with a relatively small cross-section into an optical wave with a relatively large cross-section, which array has a first rib waveguide (1) having a rib (10) with a constant cross-section, for guiding the optical wave with a relatively large cross-section in a longitudinal direction (r) of the rib (10), a second tapering rib waveguide (2) having an end (24) for injecting the optical wave with a relatively small cross-section being formed on the rib (10) of this first rib waveguide (1), the rib (20) of this second rib waveguide (2) having at its injection end (24) a smaller width (b₂) than the width (b₁) of the rib (10) of the first rib waveguide (1) and widening starting from this injection end (24) in the longitudinal direction (r), the entire second rib waveguide (2) tapering in its thickness (h₂) in the longitudinal direction (r), so that the optical wave which has a relatively small cross-section and is guided in the second rib waveguide (2) is progressively transferred into the first rib waveguide (1) located below it and is thus converted into an optical wave with a relatively large cross-section.

2. Array according to Claim 1, the rib (20) of the second rib waveguide (2) widening to the width (b₁) of the rib (10) of the first rib waveguide (1).

3. Array according to Claim 1 and 2, the thickness (h₂) of the second rib waveguide (2) tapering to zero.

4. Array according to Claim 2 and 3, the tapering of the thickness (h₂) of the second rib waveguide (2) to zero and the widening of the width (b₂) of the rib (20) of the second rib waveguide (2) to the width (b₁) of the rib (10) of the first rib waveguide (1) coinciding at a common point (24).

5. Array according to one of the preceding claims, the second rib waveguide (2) being formed in a layer structure, applied to the rib (10) of the first rib waveguide (1), comprising at least one waveguide layer (6) having a refractive index (n₁) which is relatively large in comparison with a refractive index (n₀) of said rib (10), an outer layer (5) which is applied to the waveguide layer (6) and has a refractive index (n₂) which is relatively small in comparison with the refractive index (n₁) of the waveguide layer (6) and a further layer (4) which is applied to the outer layer (5) and has a refractive index (n₀) which is relatively small in comparison with the refractive index (n₁) of the waveguide layer (6), this further layer (4) forming the rib (20) of the second rib waveguide (2).

6. Array according to Claim 5, the waveguide layer (6) being applied directly to the rib (10) of the first rib waveguide (1).

7. Array according to Claim 5, one or more layers (51, 81; 71, 82, 72, 83, 73, 84, 74, 85) being arranged between the rib (10) of the first rib waveguide (1) and the waveguide layer (6) of the second rib waveguide (2), each of which layers has a refractive index (n₂, n₄; n₀, n₃) which is smaller than the refractive index (n₁) of the waveguide layer (6).

8. Array according to Claim 7, a plurality of layers (82, 83, 84, 85), which are arranged between the rib (10) and the waveguide layer (6), being arranged at increasing distances from one another.

9. Array according to one of the preceding claims, the thickness (h₂) of the second rib waveguide (2) and/or the width (b₂) of the rib (20) of this second rib waveguide (2) tapering in a step shape.

## Revendications

1. Dispositif optique intégré pour transformer une onde optique avec une coupe transversale relativement petite en une onde optique avec une coupe transversale plus large, qui présente un premier guide d'ondes nervuré (1) avec une nervure (10) de section transversale constante, destiné au guidage de l'onde optique avec une coupe transversale plus large dans un sens longitudinal (r) de la nervure (10), un second guide d'ondes nervuré conique (2) étant formé sur la nervure (10) de ce premier guide d'ondes nervuré (1) avec une extrémité (24) pour l'alimentation de l'onde optique avec une coupe transversale plus petite, la nervure (20) de ce second guide d'ondes nervuré (2) présentant à son extrémité d'alimentation (24) une largeur (b₂) inférieure par comparaison avec la largeur (b₁) de la nervure (10) du premier guide d'ondes (1) et qui s'élargit dans le sens longitudinal (r) en partant de cette extrémité d'alimentation (24) et dans lequel la totalité du second guide d'ondes nervuré (2) s'amincit dans le sens longitudinal ( r ) dans son épaisseur (h₂), de telle manière que l'onde optique avec une coupe transversale plus petite guidée dans le second guide d'ondes nervuré (2) surcouple progressivement dans le premier guide d'ondes nervuré (1) disposé en dessous de celui-ci et est ainsi converti en une onde optique avec une coupe transversale supérieure.

2. Dispositif selon la revendication 1, dans lequel la nervure (20) du second guide d'ondes nervuré (2) s'élargit jusqu'à la largeur (b₁) de la nervure (10) du premier guide d'ondes nervuré (1).

3. Dispositif selon les revendications 1 et 2, dans lequel l'épaisseur (h₂) du second guide d'ondes nervuré (2) se réduit à zéro.

4. Dispositif selon les revendications 2 et 3, dans lequel la diminution de l'épaisseur (h₂) du second guide d'ondes nervuré (2) vers zéro et l'élargissement de la largeur (b₂) de la nervure (20) du second guide d'ondes nervuré (2) vers la largeur (b₁) de la nervure (10) du premier guide d'ondes nervuré (1) ont lieu en un endroit commun (24).

5. Dispositif selon l'une des revendications précédentes, dans lequel le second guide d'ondes nervuré (2) est formé dans une structure de couche déposée sur la nervure (10) du premier guide d'ondes nervuré (1) constituée d'au moins une couche guide d'ondes (6) avec un indice de réfraction (n₁) supérieur à un indice de réfraction (n₀) de cette nervure (10), d'une couche enveloppante (5) déposée sur la couche guide d'ondes (6), avec un indice de réfraction (n₂) inférieur à l'indice de réfraction (n₁) de la couche guide d'ondes (6), et d'une couche (4) supplémentaire déposée sur la couche enveloppante (5) avec un indice de réfraction (n₀) inférieur à l'indice de réfraction (n₁) de la couche guide d'ondes (6), cette couche supplémentaire (4) constituant la nervure (20) du second guide d'ondes nervuré (2).

6. Dispositif selon la revendication 5, dans lequel la couche guide d'ondes (6) est appliquée directement sur la nervure (10) du premier guide d'ondes nervuré (1).

7. Dispositif selon la revendication 5, dans lequel une ou plusieurs couches (51, 81; 71, 82, 72, 83, 73, 84, 74, 85) sont disposées entre la nervure (10) du premier guide d'ondes nervuré (1) et de la couche guide d'ondes (6) du second guide d'ondes nervuré (2), dont chacune présente un indice de réfraction (n₂, n₄; n₀, n₃) inférieur à l'indice de réfraction (n₁) de la couche guide d'ondes (6).

8. Dispositif selon la revendication 7, dans lequel plusieurs couches (82, 83, 84, 85) disposées entre la nervure (10) et la couche guide d'ondes (6) sont disposées à une distance croissante les unes des autres.

9. Dispositif selon l'une des revendications précédentes, dans lequel l'épaisseur (h₂) du second guide d'ondes (2) et/ou la largeur (b₂) de la nervure (20) de ce second guide d'ondes nervuré (2) diminue graduellement.
